# EUROPÄISCHE PATENTSCHRIFT

(11) **EP 4 498 289 B1**
(45) Veröffentlichungstag und Bekanntmachung des Hinweises auf die Patenterteilung: **18.11.2026**
(21) Anmeldenummer: 23188222.6
(22) Anmeldetag: 27.07.2023
(51) Int. Cl.: G06N 5/01, G06N 20/00, G06V 20/56, G06V 10/774, G06F 18/214

(54) **VERFAHREN ZUM TRAINIEREN EINES MASCHINELLEN LERNMODELLS ZUM KLASSIFIZIE-REN VON SENSORDATEN**
METHOD FOR TRAINING A MACHINE LEARNING MODEL FOR CLASSIFYING SENSOR DATA
PROCÉDÉ D'APPRENTISSAGE D'UN MODÈLE D'APPRENTISSAGE MACHINE POUR CLASSER DES DONNÉES DE CAPTEUR

(43) Veröffentlichungstag der Anmeldung: 29.01.2025
(73) Patentinhaber: Robert Bosch GmbH, 70442 Stuttgart (DE)
(72) Erfinder: Schmidt, Frank, 71229 Leonberg (DE); Domokos, Csaba, 75397 Simmozheim (DE)

(56) Entgegenhaltungen:
- US-A1- 2019 095 805
- US-A1- 2020 004 247
- HEHN THOMAS M. ET AL: "End-to-End Learning of Decision Trees and Forests", vol. 128, no. 4, 9 October 2019 (2019-10-09), New York, pages 997 - 1011, XP093119267, ISSN: 0920-5691, Retrieved from the Internet <URL:https://link.springer.com/content/pdf/10.1007/s11263-019-01237-6.pdf> [retrieved on 20240119], DOI: 10.1007/s11263-019-01237-6
- QUINT ELEANOR ET AL: "Interpretable Classification via Supervised Variational Autoencoders and Differentiable Decision Trees", ICLR 2018 CONFERENCE BLIND SUBMISSION, 15 February 2018 (2018-02-15), pages 1 - 12, XP093119282, Retrieved from the Internet <URL:https://openreview.net/pdf?id=rJhR_pxCZ> [retrieved on 20240115]

## Beschreibung

Die vorliegende Offenbarung bezieht sich auf Verfahren zum Trainieren eines maschinellen Lernmodells zum Klassifizieren von Sensordaten.

Objektdetektion (insbesondere in Bildern) ist eine häufige Aufgabe im Zusammenhang der autonomen Steuerung von Robotervorrichtungen wie Roboterarmen und autonomen Fahrzeugen. Beispielsweise soll eine Steuerung für einen Roboterarm in der Lage sein, ein Objekt, das vom Roboterarm genommen werden soll, zu erkennen (z.B. unter mehreren unterschiedlichen Objekten) und ein autonomes Fahrzeug muss in der Lage sein, andere Fahrzeuge, Fußgänger und stationäre Hindernisse als solche zu erkennen.

So eine Objektdetektion (eine Klassifikation, welches Objekt in Sensordaten "enthalten" ist, d.h. durch die Sensordaten repräsentiert wird) wird in einer Vorrichtung mit geringen Datenverarbeitungsressourcen durchgeführt, z.B. einem intelligenten (d.h. "smart") Sensor. Aufgrund der begrenzten Datenverarbeitungsressourcen (Rechenleistung und Speicher) ist in so einem Fall die Verwendung eines verhältnismäßig einfachen maschinellen Lernmodells für die Objektdetektion wünschenswert, wie beispielsweise eines Entscheidungsbaums. Bei einem Entscheidungsbaum wird jedoch typischerweise in jedem Knoten eine Komponente eines Eingangsvektors (z.B. eines Vektors von aus Sensordaten extrahierten Merkmalen) ausgewählt, was dazu führt, dass der Entscheidungsbaum nicht nach seinen Parametern differenzierbar ist (da die Auswahlfunktion nicht differenzierbar ist) und deshalb Gradienten-basierte Trainingsverfahren nicht möglich sind. Dies macht das Training eines solchen maschinellen Lernmodells ineffizient.

Es sind deshalb Herangehensweisen wünschenswert, die ein effizientes Training für Entscheidungsbaum-basierte maschinelle Lernmodelle ermöglichen.

Die Veröffentlichung Hehn Thomas M. et al: "End-to-End Learning of Decision Trees and Forests", International Journal of Computer Vision, Bd. 128, Nr. 4, 9. Oktober 2019, Seiten 997-1011, New York, beschreibt das Training von Entscheidungsbäumen mittels eines EM(Expectation-Maximization)-Trainingsverfahrens.

Gemäß verschiedenen Ausführungsformen wird ein Verfahren bereitgestellt, wie es durch Anspruch 1 im beigefügten Anspruchssatz beschrieben ist.

Das oben beschriebene Verfahren ermöglicht ein Gradienten-basiertes Training eines (verallgemeinerten und dadurch differenzierbaren) Entscheidungsbaums. Dies ermöglicht z.B. ein an neue Daten anpassungsfähiges Training und das Training lässt sich in differenzierbare Frameworks integrieren, wie sie beispielsweise für Deep Learning verwendet werden. Darüber hinaus ist der so formulierte Entscheidungsbaum mit differenziellen Ansätzen zur Robustheits- und Erklärbarkeitsanalyse geeignet.

Im Folgenden werden verschiedene Ausführungsbeispiele angegeben.

Ausführungsbeispiel 1 ist ein Verfahren zum Steuern einer Robotervorrichtung, wie durch Anspruch 1 beschrieben.

Ausführungsbeispiel 2 ist ein Verfahren nach Ausführungsbeispiel 1, wobei der kontinuierliche Wertebereich die N-dimensionalen Einheitskugel bzgl. der Summennorm ist.

Dadurch wird erreicht, dass die Parametervektoren sich im Training so entwickeln, dass sie letztendlich (jeweils) dünn besetzt sind bzw. sogar ein klassischer Entscheidungsbaum entsteht, bei dem in jedem Parametervektor nur eine 1 vorhanden ist (alle anderen Einträge müssen dann aufgrund der Form des Wertebereichs 0 sein).

Ausführungsbeispiel 3 ist ein Verfahren nach Ausführungsbeispiel 1 oder 2, aufweisend, für jedes der Sensordaten-Trainingsdatenelemente,
- für jede Folge von mehreren Folgen von Entscheidungen des maschinellen Lernmodells (d.h. mehrere Entscheidungsbäume des maschinellen Lernmodells)
   ∘ Verarbeiten des jeweiligen Eingabevektors durch die Folge von Entscheidungen, wobei bei jeder Entscheidung das Skalarprodukt des Eingabevektors mit einem jeweiligen Parametervektor (pro Entscheidung und pro Entscheidungsbaum) gebildet wird und das Ergebnis der Entscheidung davon abhängt, ob das Skalarprodukt kleiner oder größer als ein vorgegebener jeweiliger Parameter (pro Entscheidung und pro Entscheidungsbaum) ist,
   ∘ Ermitteln, abhängig von den Ergebnissen der jeweilige Folge von Entscheidungen, für jede mehrerer Klassen einer jeweiligen Klassenzugehörigkeitswahrscheinlichkeit für das Trainings-Sensordatenelement;
   ∘ Ermitteln, für jede Klasse, einer kombinierten Zugehörigkeitswahrscheinlichkeit für die Klasse durch Summieren der für die Folgen von Entscheidungen für die Klasse ermittelten Zugehörigkeitswahrscheinlichkeiten,
   ∘ Ermitteln eines Verlusts der für das Trainingsdatenelement ermittelten kombinierten Klassenzugehörigkeitswahrscheinlichkeit gegenüber der Grundwahrheit für die Klassenzugehörigkeit des Sensordaten-Trainingsdatenelements; und
- Anpassen des maschinellen Lernmodells zum Verringern eines Gesamtverlusts, der die für die Sensordaten-Trainingsdatenelemente ermittelten Verluste beinhaltet, wobei der Parametervektor (s) für jede Entscheidung des maschinellen Lernmodells (und damit für jeden der Entscheidungsbäume) innerhalb des kontinuierlichen Wertebereichs angepasst wird.

Durch die Verwendung mehrere Entscheidungsbäume ist das maschinelle Lernmodell flexibler und kann komplexe Klassifikationsaufgaben lernen.

Ausführungsbeispiel 4 ist ein Verfahren nach einem der Ausführungsbeispiele 1 bis 3, wobei für jede Entscheidung das Ergebnis der Entscheidung berechnet wird, der Null ist, wenn das Skalarprodukt kleiner ist als der vorgegebene jeweilige Parameter und ungleich (z.B. größer Null, aber dies kann natürlich auch mit negativen Werten implementiert werden) Null sonst ist.

Dies ermöglicht eine einfache Ermittlung der Entscheidungsergebnisse und (nach abschließender Normierung), eine einfache Ermittlung der Klassenzugehörigkeitswahrscheinlichkeiten.

Ausführungsbeispiel 5 ist eine Datenverarbeitungsvorrichtung, die eingerichtet ist, ein Verfahren nach einem der Ausführungsbeispiele 1 bis 4 durchzuführen.

Ausführungsbeispiel 6 ist ein Computerprogramm mit Befehlen, die, wenn sie durch einen Prozessor ausgeführt werden, bewirken, dass der Prozessor ein Verfahren nach einem der Ausführungsbeispiele 1 bis 4 durchführt.

Ausführungsbeispiel 7 ist ein computerlesbares Medium, das Befehle speichert, die, wenn sie durch einen Prozessor ausgeführt werden, bewirken, dass der Prozessor ein Verfahren nach einem der Ausführungsbeispiele 1 bis 4 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
- Figur 1: zeigt ein Fahrzeug.
- Figur 2: veranschaulicht einen Entscheidungsbaum.
- Figur 3: zeigt ein Ablaufdiagramm, das ein Verfahren zum Trainieren eines maschinellen Lernmodells zum Klassifizieren von Sensordaten. gemäß einer Ausführungsform darstellt.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann.

Im Folgenden werden verschiedene Beispiele genauer beschrieben.

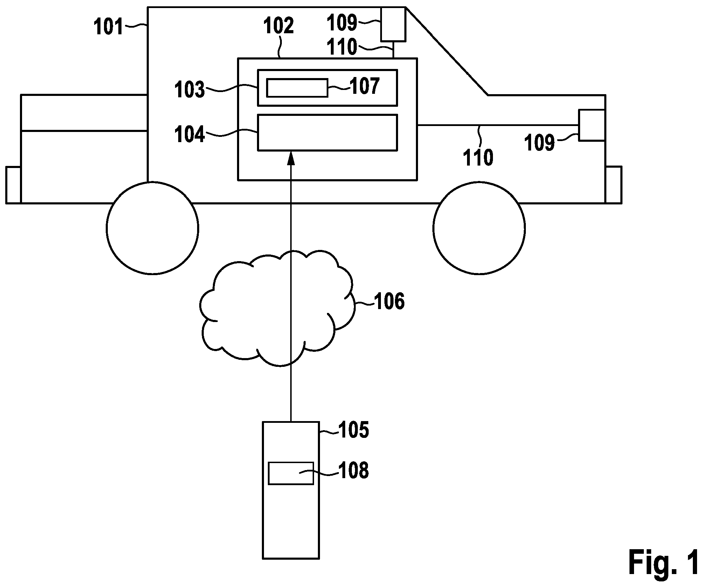

Figur 1 zeigt ein Fahrzeug 101.

Im Beispiel von Figur 1 ist ein Fahrzeug 101, beispielsweise ein PKW oder LKW, mit einer Fahrzeugsteuereinrichtung (auch also elektronische Steuereinheit bezeichnet, z.B. ein Steuergerät, z.B. eine Electronic Control Unit (ECU)) 102 versehen.

Die Fahrzeugsteuereinrichtung 102 weist Datenverarbeitungskomponenten auf, z.B. einen Prozessor (z.B. eine CPU (Zentraleinheit)) 103 und einen Speicher 104 zum Speichern von Steuersoftware 107, gemäß der die Fahrzeugsteuereinrichtung 102 arbeitet, und Daten, die von dem Prozessor 103 verarbeitet werden. Der Prozessor 103 führt die Steuersoftware 107 aus.

Beispielsweise weist die gespeicherte Steuerungssoftware (Computerprogramm) Anweisungen auf, die, wenn der Prozessor sie ausführt, bewirken, dass der Prozessor 103 Fahrerassistenz-Funktionen (d.h. die Funktion eines ADAS (Advanced Driver Assistance System)) ausführt oder sogar das Fahrzeug autonom steuert (AD (Autonomous Driving)).

Die Steuersoftware 107 wird beispielsweise von einem Computersystem 105, z.B. über ein Kommunikationsnetz 106 (oder auch mit Hilfe eines Speichermediums wie einer Speicherkarte), an das Fahrzeug 101 übertragen. Dies kann auch im Betrieb geschehen (oder zumindest, wenn das Fahrzeug 101 beim Benutzer ist), da die Steuersoftware 107 beispielsweise im Laufe der Zeit auf neue Versionen aktualisiert wird.

Die Steuersoftware 107 ermittelt Steueraktionen für das Fahrzeug (wie z.B. Lenkaktionen, Bremsaktionen etc.) aus Eingangsdaten, die ihr zur Verfügung stehen und die Informationen über die Umgebung enthalten bzw. aus denen sie Informationen über die Umgebung ableitet (wie z.B. durch Detektion von anderen Verkehrsteilnehmern, z.B. anderen Fahrzeugen). Diese sind beispielsweise Sensordaten von einer oder mehrerer Sensorvorrichtungen 109, wie z.B. von einer Kamera des Fahrzeugs 101, die über ein Kommunikationssystem 110 (z.B. ein Fahrzeug-Bussystem wie CAN (Controller Area Network)) mit der Fahrzeugsteuereinrichtung 102 verbunden sind.

Zur Verarbeitung der Sensordaten kann ein maschinelles Lernmodell 108 vorgesehen sein, das auf der Grundlage von Trainingsdaten, in diesem Beispiel vom Computersystem 105, trainiert wird. Das Computersystem 105 implementiert also einen ML-Trainingsalgorithmus zum Training von einem (oder mehreren) ML-Modelle(n) 108.

Das ML-Modell ist ein ML-Modell zur Objekterkennung (z.B. anderer Fahrzeuge etc.), insbesondere einer Klassifikation (z.B. einer Klassifikation eines Kamerabilds oder eines Bereichs in einem Kamerabild dahingehend, was in dem Bild oder Bildbereich gezeigt ist).

Mit so einer Bearbeitung der Roh-Sensordaten (wie Kamerabildern) werden "intelligente" Sensoren geschaffen, die mehr Information als nur rohe Sensordaten liefern, wie beispielsweise eine Klassifizierungsausgabe für nachgelagerte Aufgaben (sie z.B. eine Steuerung des Fahrzeugs 100). Dazu kann es wünschenswert sein, das maschinelle Lernmodell 108 direkt in einer jeweiligen Sensorvorrichtung 109 zu implementieren (z.B. wird es von der Steuereinrichtung 102 in die Sensorvorrichtung 109 geladen), sodass die Sensorvorrichtung 109 einen in diesem Sinne intelligenten Sensor implementiert.

Da die Rechenkapazitäten einer solchen Sensorvorrichtung 109 jedoch typischerweise eher begrenzt sind, kann es erforderlich sein, dass das maschinelle Lernmodell 108 eine verhältnismäßig geringe Komplexität aufweist. Eine Möglichkeit im Falle einer Klassifizierungsaufgabe ist es, Entscheidungsbäume zu einer Sammlung von Entscheidungsbäumen zu kombinieren (zu einem "Wald", z.B. zu einem Zufallswald (engl. Random Forest) oder einem Boosted Tree), um jeder Klasse einer vorgegebenen Menge von Klassen (z.B. Fußgänger, Fahrzeug, Verkehrsschild) eine bestimmte Wahrscheinlichkeit zuzuordnen. Dieser Ansatz funktioniert zwar in der Praxis gut, setzt aber voraus, dass die Sensorvorrichtung 109 ein eigenständiges System ist. Um die Sensorvorrichtung 109 in ein größeres System (z.B. mit mehreren Sensorvorrichtungen 109, die zusammenarbeiten sollen) zu integrieren, ist es wünschenswert, die Sammlung von Entscheidungsbäumen neu zu trainieren, typischerweise auf der Grundlage eines rückpropagierten Verlusts.

Da klassische Entscheidungsbäume nicht differenzierbar sind, kann dies jedoch nicht mit einem Gradienten-basierten Ansatz erreicht werden. Im Folgenden wird deshalb eine Ausführungsform beschrieben, die das Training mittels eines Gradienten-basierten Ansatzes ermöglicht. Gemäß verschiedenen Ausführungsformen erfolgt dies anschaulich gesprochen dadurch, dass eine allgemeinere Formulierung einer Sammlung von Entscheidungsbäumen (speziell eines einzelnen Entscheidungsbaums) verwendet wird. Hinweis: Im Folgenden bezeichnen wird eine Sammlung von Bäumen als "Wald" bezeichnet. Dies ist nicht zu verwechseln mit einem Zufallswald, der eine spezifische Kombination von Bäumen auf der Grundlage von Mehrheitsentscheidungen ist.

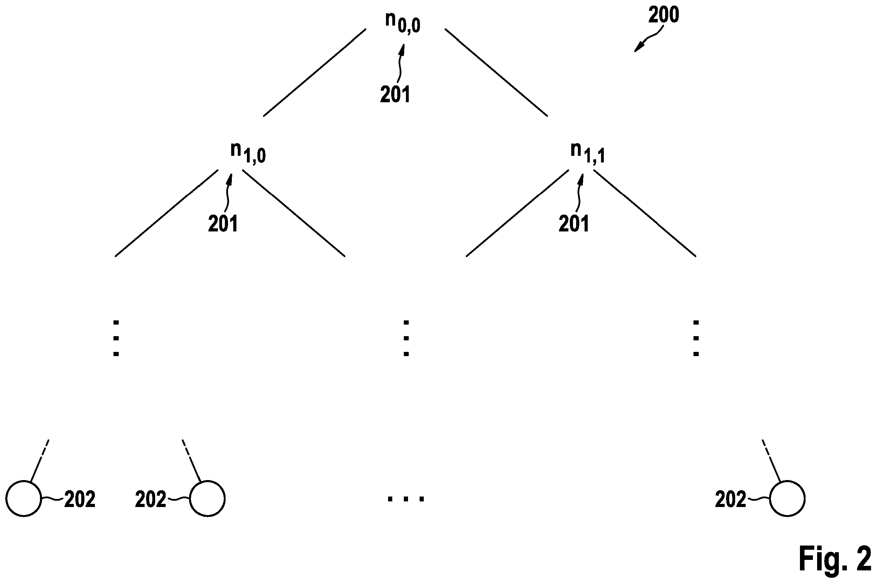

Figur 2 veranschaulicht einen Entscheidungsbaum 200.

Ein Entscheidungsbaum ist ein binärer Baum, bei dem an jedem Knoten n eine Entscheidung 201 getroffen wird, ob an diesem Knoten dem linken oder dem rechten Zweig gefolgt wird. Mathematisch lässt sich die Entscheidung als eine Funktion *dₙ*:*R^{N}* → *R* beschreiben, wobei *x∈R^{N}* der Merkmals-Eingangsvektor ist. Die Entscheidung, den jeweiligen linken Zweig zu betreten, wird dann durch [*dₙ*(*x*)≤0] bestimmt. Im Beispiel von Figur 1 (und in den folgenden Beispielen) werden die Knoten n durch zwei Zahlen indiziert: Die erste Zahl ist die Ebene des Baumes *ℓ* ( *ℓ*=0*,* ..., 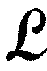 ), die zweite Zahl die Nummer des jeweiligen Knotens (beginnend bei Null innerhalb der Ebene). Ganz am Ende des Entscheidungsbaumes sind eine Vielzahl von 2 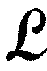 Blättern 202. Jedem Blatt 202 (Index j) ist ein Vektor qⱼ zugeordnet. Dieser enthält einen Beitrag zum Klassenwahrscheinlichkeit (also Klassen-Soft-Value) für jede Klasse. Kommt der Entscheidungsbaum beispielsweise bei der Verarbeitung eines Eingabevektors *x* ∈ *R^{N}* (der z.B. aus einem Kamerabild abgeleitet wurde oder eine Vektordarstellung von anderen Sensordaten oder Merkmalen davon ist) zu einem bestimmten Blatt j, liefert dies beispielsweise eine durch den Vektor qⱼ eine Information wie "Wahrscheinlichkeit für Fußgänger 10%, für Radfahrer 15%, für Verkehrszeichen 70%"). Durch Kombination (normierte Summation) dieser Ausgaben von mehreren Entscheidungsbäumen kann dann ein Ausgabevektor *F*(*x*) mit einer Klassenwahrscheinlichkeit für jede Klasse erzeugt werden.

In einem klassischen Entscheidungsbaum werden Entscheidungsfunktionen der folgenden Form verwendet: ${d}_{n} \left(x\right) = {x}_{i} - b$ (1) Dies bedeutet, dass eine Komponente *xᵢ* des Eingangsvektors *x* ∈ *R^{N}* (also z.B. ein bestimmtes Merkmal) ausgewählt wird und mit einem Schwellenwert *b∈R* verglichen wird. Das Training eines solchen Entscheidungsbaums beinhaltet ein Training des Paares (*i*,) (für jeden Knoten), und Schlussfolgerungen können sehr schnell erzeugt werden, d.h. die Inferenz ist sehr schnell, da sie in einem Computerprogramm pro Entscheidungsknoten lediglich eine if-Klausel erfordert. Allerdings macht der diskrete Wert *i* (d.h. die Operation der Auswahl einer Komponente von *x*) diesen Ansatz nicht differenzierbar, wodurch ein Training mit Back-Propagation nicht möglich ist.

Verschiedene Ausführungsformen, um ein Training mit Back-Propagation zu ermöglichen, basiert auf der Verwendung der Funktion ${d}_{n} \left(x\right) = \left〈x, s\right〉 - b$ (2) für die Entscheidungen.

Hierbei ist *b∈R* wie oben eine kontinuierliche Schwelle und *s*∈*S* mit $S = \left\{y∈{R}^{N}\left|{\sum }_{i = 1}^{N} \left|{y}_{i}\right| \leq 1\right.\right\} ,$ (3) d.h. aus der N-dimensionalen Einheitskugel bzgl. der Summennorm (d.h. I1-Norm).

Bei diesem Ansatz sind die Entscheidungen an jedem Knoten nicht nur differenzierbar, sondern er enthält auch den ursprünglichen Ansatz der Merkmalsauswahl: In der Tat kann *dₙ*(*x*) = *xᵢ* - *b* simuliert werden, indem s als i-ter Einheitsvektor gewählt wird. Somit kann das Training des Entscheidungsbaums mit den Entscheidungen nach (2) zu einem "klassischen" Entscheidungsbaum mit Entscheidungsbaum nach (1) gelangen.

Insbesondere kann im Training die dünne Besetztheit (engl. sparsity) von s belohnt werden, sodass der zusätzlichen Rechenaufwand (bei der Inferenz) begrenzt wird (der grundsätzlich bei Entscheidungen nach (2) auftreten könnte). Dies kann beispielsweise dadurch erfolgen, dass eine trainierbare Variable *s'∈R^{N}* im Training trainiert wird und *s = π_{S}*(*s*') gesetzt wird (d.h. zur Ermittlung von s der Vektor s' auf die Menge von (3) projiziert wird, z.B. im Sinne der I2-Projektion (d.h. die Projektion von s' auf S ist der nächstgelegene Punkt auf S zu s' im Sinne des euklidischen Abstands).

Die Entscheidung *dn* nach (2) kann für jede Ebene ℓ des Entscheidungsbaums in eine Schicht *L_{ℓ}: R^{2^{ℓ}}* × *Rⁿ* → übersetzt werden. Diese Schicht berechnet ${L}_{l} {\left({p}_{1}, … , {p}_{{2}^{l}},x\right)}_{2 k - 1 , 2 k} = \left({p}_{k}⋅ϕ\left({d}_{{n}_{k}}\left(x\right)\right); {p}_{k}⋅ϕ\left(-{d}_{{n}_{k}}\left(x\right)\right)\right)$ (4) Dabei ist *ϕ* eine Aktivierungsfunktion, wie z.B. ReLU sein, d. h. *φ*(*x*)=[*x*]*₊,* oder auch möglicherweise eine andere Aktivierungsfunktion.

Als Beispiel werde ein Entscheidungsbaum mit zwei (Entscheidungs-)Ebenen betrachtet, also einer Wurzel *n*_{0,0} und zwei inneren Knoten *n*_{1,0} und *n*_{1,1} (d.h. Knoten zwischen Wurzel und Blättern).

Bei gegebenem Datenpunkt (d.h. Eingabevektor) *x* ∈ *R^{N}* wird Folgendes berechnet
1. ${p}^{1} = \left({p}_{1}^{1}, {p}_{2}^{1}\right) = {L}_{0} \left(1, x\right) = \left({\left[{d}_{{n}_{0 , 0}}\left(x\right)\right]}_{+}, {\left[{d}_{{n}_{0 , 0}}\left(x\right)\right]}_{_}\right)$
2. ${p}^{2} = {L}_{1} \left({p}^{1}, x\right) = \left({\left[{p}_{1}^{1}⋅{d}_{{n}_{1 , 0}}\left(x\right)\right]}_{+}, {\left[{p}_{1}^{1}⋅{d}_{{n}_{1 , 0}}\left(x\right)\right]}_{_}, {\left[{p}_{2}^{1}⋅{d}_{{n}_{1 , 1}}\left(x\right)\right]}_{+}, {\left[{p}_{2}^{1}⋅{d}_{{n}_{1 , 1}}\left(x\right)\right]}_{-}\right)$

Der Vektor *p*² enthält vier Werte, von denen nur einer ungleich Null ist. So kann der diskrete Pfad innerhalb des Entscheidungsbaums in einem kontinuierlichen Sinne simulieren werden. Bei der beschriebenen Herangehensweise wird also jede diskrete Entscheidung in einem Entscheidungsbaum durch ein kontinuierliches Gegenstück ersetzt.

In Form eines Algorithmus in Pseudo-Code wird die Ausgabe eines Entscheidungsbaums mit Tiefe 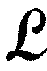 für einen Eingabevektor *x* ∈ *R^{N}* wie folgt berechnet:
1. Setze i=0, *p*=1.
2. Berechne *p=Lᵢ(p,x)* nach (4)
3. Setze *i*=*i*+1 und gehe zurück zu 2, falls *i <* 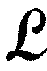 .
4. Berechne $p = \frac{p}{{\sum }_{i = 1}^{{2}^{L}} {p}_{i}}$
5. Gib $T \left(x\right) : = {\sum }_{i = 1}^{{2}^{L}} {p}_{j} ⋅ {q}_{j}$ zurück

Hierbei sind die folgenden Parameter trainierbar:
- Für jede Schicht *i <* 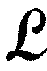 *, sᵢ* und *bᵢ.*
- Die Klassenwahrscheinlichkeiten *q*₁,...*q*₂ 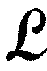

So kann beispielsweise für einen Batch von Trainings-Eingaben *x* ∈ *R^{N}* jeweils ein Verlust berechnet werden (z.B. Kreuzentropie-Verlust bzgl. Grundwahrheits(engl. Ground Truth)-Labels) und die trainierbaren Parameter zur Reduzierung des Verlusts angepasst werden.

Bei Verwendung eines Waldes (gebildet aus einer konvexe Kombination solcher differenzierbaren Entscheidungsbäume) gibt es zusätzlich Mischparameter *θₖ* ≥ 0 und das Klassifikationsergebnis ist *F*(*x*)*=Σθₖ·Tₖ*(*x*)*,* wobei Σ*θₖ*=1 und *Tₖ*(*x*) das Ergebnis des k-ten Baumes (Schritt 5 im obigen Algorithmus) ist.

In diesem Fall können beim Training die trainierbaren Parameter pro Entscheidungsbaum (wie oben angegeben) sowie die Mischparameter zum Reduzieren des Verlusts (von *F*(*x*) gegenüber einer Grundwahrheit) trainiert.

Für ein Klassifizierungsproblem in einer vollüberwachten Umgebung kann wie oben erwähnt der Kreuzentropieverlust (engl. cross entropy loss) verwendet werden. Wie oben erläutert ist die Ausgabe eines Entscheidungsbaums bzw. eines Waldes eine Wahrscheinlichkeit pro Klasse, sodass sich der Kreuzentropieverlust gut eignet.

Um das Training zu vereinfachen, kann die ReLU-Funktion durch eine "undichte" (engl. leaky) ReLU-Funktion ersetzt werden, deren "Undichtigkeit" (engl. leakiness) während der Trainingszeit reduziert werden kann.

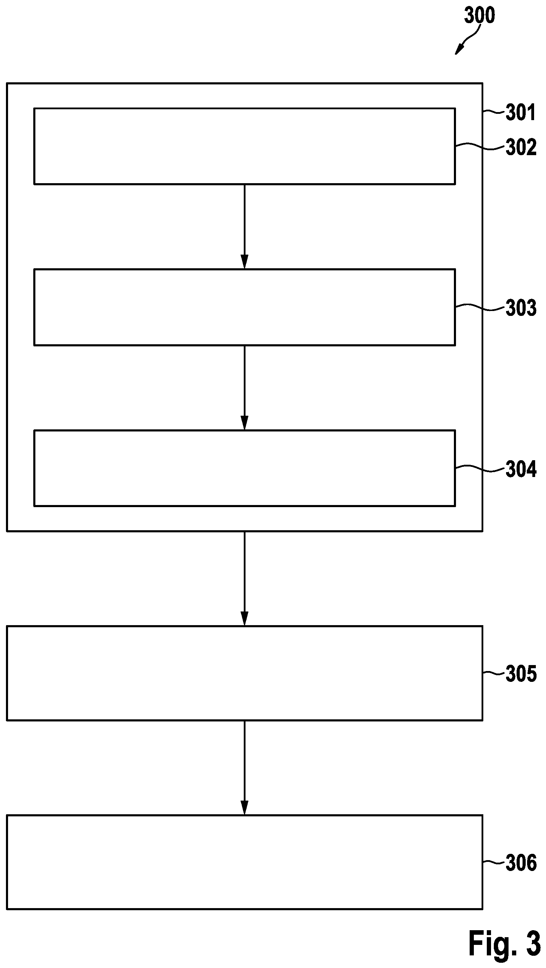

Zusammengefasst wird gemäß verschiedenen Ausführungsformen ein Verfahren bereitgestellt, wie in Figur 3 dargestellt.

Figur 3 zeigt ein Ablaufdiagramm 300, das ein Verfahren zum Trainieren eines maschinellen Lernmodells zum Klassifizieren von Sensordaten. gemäß einer Ausführungsform darstellt.

In 301 wird für jedes der Trainings-Sensordatenelement einer Vielzahl von Trainings-Sensordatenelementen,
- In 302 das Trainings-Sensordatenelement als Eingabevektor (in den Ausführungsbeispielen als x bezeichnet) repräsentiert (d.h. ein entsprechender Eingabevektor erzeugt, z.B. durch Merkmalsextraktion aus den Sensordaten des Trainings-Sensordatenelements)
- In 303 der Eingabevektor durch eine Folge von Entscheidungen des maschinellen Lernmodells verarbeitet (d.h. das maschinelle Lernmodell enthält mindestens einen Entscheidungsbaum), wobei bei jeder Entscheidung das Skalarprodukt des Eingabevektors (x) mit einem jeweiligen Parametervektor (in den Ausführungsbeispielen als s bezeichnet) gebildet wird und das Ergebnis der Entscheidung davon abhängt, ob das Skalarprodukt kleiner oder größer als ein vorgegebener jeweiliger Parameter (in den Ausführungsbeispielen als b bezeichnet) ist (entsprechend ist das Ergebnis der Entscheidung beispielsweise 0 oder größer als Null),
- In 304 abhängig von den Ergebnissen der Folge von Entscheidungen, für jede mehrerer Klassen eine jeweilige Klassenzugehörigkeitswahrscheinlichkeit für das Trainings-Sensordatenelement ermittelt (je nach erreichtem Blatt (dem die Zugehörigkeitswahrscheinlichkeiten zugeordnet sind)); und
- In 305 ein Verlust der für das Trainingsdatenelement ermittelten Klassenzugehörigkeitswahrscheinlichkeit gegenüber einer Grundwahrheit für die Klassenzugehörigkeit des Sensordaten-Trainingsdatenelements ermittelt.

In 306 wird das maschinelle Lernmodell zum Verringern eines Gesamtverlusts, der die für die Sensordaten-Trainingsdatenelemente ermittelten Verluste beinhaltet, wobei der Parametervektor (s) für jede Entscheidung des maschinellen Lernmodells innerhalb eines kontinuierlichen Wertebereichs angepasst wird (d. h. Parameterwerte des maschinellen Lernmodells, insbesondere s (und auch b oder auch die Mischparameter *θₖ* wie im obigen Beispiel), werden in einer Richtung, in der der Verlust reduziert wird, d.h. entsprechend einem Gradienten des Verlusts, angepasst, typischerweise unter Verwendung einer Back-Propagation).

Das Verfahren von Figur 3 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z. B. implementiert) werden, die durch die Datenverarbeitungseinheit durchgeführt werden.

Das Verfahren ist also gemäß verschiedenen Ausführungen insbesondere computerimplementiert.

Verschiedene Ausführungsformen können Bilddaten von verschiedenen Sensoren (die Ausgabedaten in Bildform ausgeben können) wie z.B. Einzelbilder, Video, Radar, LiDAR, Ultraschall, Bewegung, Wärmeabbildung usw. empfangen und verwenden. Sensordaten können für Zeiträume gemessen oder auch simuliert werden (z.B. um Trainingsdatenelemente zu erzeugen).

Diese Sensordaten können insbesondere klassifiziert werden, z.B. um die Anwesenheit von Objekten, die in den Sensordaten repräsentiert sind, zu detektieren (z.B. Verkehrsschilder, die Fahrbahn, Fußgänger und andere Fahrzeuge im Falle des Einsatzes in einem Fahrzeug). Insbesondere kann die Herangehensweise von Figur 4 in verschiedene Frameworks integriert werden, in denen neue Klassen auftreten. Auf diese Weise kann die Herangehensweise von Figur 4 mit verschiedenen Kl-gesteuerten Wahrnehmungssystemen wie in der Robotik und bei selbstfahrenden Autos eingesetzt werden.

Die Herangehensweise von Figur 4 dient allgemein beispielsweise zum Erzeugen eines Steuersignals für eine Robotervorrichtung. Der Begriff "Robotervorrichtung" kann als sich auf irgendein technisches System (mit einem mechanischen Teil, dessen Bewegung gesteuert wird) beziehend verstanden werden, wie z. B. eine computergesteuerte Maschine, ein Fahrzeug, ein Haushaltsgerät, ein Elektrowerkzeug, eine Fertigungsmaschine, einen persönlichen Assistenten oder ein Zugangssteuersystem. Es wird eine Steuerungsvorschrift für das technische System gelernt und das technische System dann entsprechend gesteuert. Die Herangehensweise kann aber auch in Systemen, die Informationen wiedergeben, eingesetzt werden, wie z.B. in einem Überwachungssystem (z.B. werden Personen detektiert) oder einem medizinischen (Bildverarbeitungs-)System.

Das Verfahren von Figur 3 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z. B. implementiert) werden, die durch die Datenverarbeitungseinheit durchgeführt werden.

Das Verfahren ist also gemäß verschiedenen Ausführungen insbesondere computerimplementiert.

Verschiedene Ausführungsformen können Bilddaten von verschiedenen Sensoren (die Ausgabedaten in Bildform ausgeben können) wie z.B. Einzelbilder, Video, Radar, LiDAR, Ultraschall, Bewegung, Wärmeabbildung usw. empfangen und verwenden. Sensordaten können für Zeiträume gemessen oder auch simuliert werden (z.B. um Trainingsdatenelemente zu erzeugen).

Diese Sensordaten können insbesondere klassifiziert werden, z.B. um die Anwesenheit von Objekten, die in den Sensordaten repräsentiert sind, zu detektieren (z.B. Verkehrsschilder, die Fahrbahn, Fußgänger und andere Fahrzeuge im Falle des Einsatzes in einem Fahrzeug). Insbesondere kann die Herangehensweise von Figur 4 in verschiedene Frameworks integriert werden, in denen neue Klassen auftreten. Auf diese Weise kann die Herangehensweise von Figur 4 mit verschiedenen Kl-gesteuerten Wahrnehmungssystemen wie in der Robotik und bei selbstfahrenden Autos eingesetzt werden.

Die Herangehensweise von Figur 4 dient allgemein beispielsweise zum Erzeugen eines Steuersignals für eine Robotervorrichtung. Der Begriff "Robotervorrichtung" bezieht sich auf ein technisches System mit einem mechanischen Teil, dessen Bewegung gesteuert wird, wie z. B. eine computergesteuerte Maschine, oder ein Fahrzeug.

Es wird eine Steuerungsvorschrift für das technische System gelernt und das technische System dann entsprechend gesteuert.

Die Erfindung wird in den unabhängigen Ansprüchen dargelegt und weitere Ausführungsformen werden in den abhängigen Ansprüchen definiert.

## Patentansprüche

1. Verfahren zum Steuern einer Robotervorrichtung (101), aufweisend: Trainieren eines maschinellen Lernmodells (108, 200) zum Klassifizieren von Sensordaten, durch:
Für jedes der Trainings-Sensordatenelement einer Vielzahl von Trainings-Sensordatenelementen,
Repräsentieren des Trainings-Sensordatenelements als Eingabevektor durch Merkmalsextraktion aus Sensordaten des Trainings-Sensordatenelements,
Verarbeiten des Eingabevektors durch eine Folge von Entscheidungen (201) des maschinellen Lernmodells (108, 200), wobei bei jeder Entscheidung (201) ein Skalarprodukt des Eingabevektors mit einem jeweiligen Parametervektor gebildet wird und ein Ergebnis der Entscheidung (201) davon abhängt, ob das Skalarprodukt kleiner oder größer als ein vorgegebener jeweiliger Parameter ist,
Ermitteln, abhängig von den Ergebnissen der Folge von Entscheidungen (201), für jede mehrerer Klassen einer jeweiligen Klassenzugehörigkeitswahrscheinlichkeit für das Trainings-Sensordatenelement;
Ermitteln eines Verlusts der für das Trainings-Sensordatenelement ermittelten Klassenzugehörigkeitswahrscheinlichkeit gegenüber einer Grundwahrheit für die Klassenzugehörigkeit des Trainings-Sensordatenelements, und Anpassen des maschinellen Lernmodells (108, 200) zum Verringern eines Gesamtverlusts, der die für die Trainings-Sensordatenelemente ermittelten Verluste beinhaltet, wobei der Parametervektor für jede Entscheidung (201) des maschinellen Lernmodells (108, 200) innerhalb eines kontinuierlichen Wertebereichs angepasst wird;
Erfassen von Sensordaten bezüglich einer Umgebung der Robotervorrichtung;
Klassifizieren eines durch die Sensordaten repräsentierten Objekts durch Klassifizieren der Sensordaten mittels des trainierten maschinellen Lernmodells (108, 200); und
Steuern der Robotervorrichtung (101) gemäß der Klassifikation des Objekts.

2. Verfahren nach Anspruch 1, wobei der kontinuierliche Wertebereich die Menge $S = \left\{y∈{R}^{N}\left|{\sum }_{i = 1}^{N} \left|{y}_{i}\right| \leq 1\right.\right\}$ ist, wobei N die Dimension des Parametervektors ist.

3. Verfahren nach Anspruch 1 oder 2, aufweisend, für jedes der Trainings-Sensordatenelemente für jede Folge von mehreren Folgen von Entscheidungen (201) des maschinellen Lernmodells (108, 200) Verarbeiten des Eingabevektors durch die Folge von Entscheidungen (201), wobei bei jeder Entscheidung (201) das Skalarprodukt des Eingabevektors mit einem jeweiligen Parametervektor gebildet wird und das Ergebnis der Entscheidung (201) davon abhängt, ob das Skalarprodukt kleiner oder größer als ein vorgegebener jeweiliger Parameter ist,
Ermitteln, abhängig von den Ergebnissen der jeweilige Folge von Entscheidungen (201), für jede mehrerer Klassen einer jeweiligen Klassenzugehörigkeitswahrscheinlichkeit für das Trainings-Sensordatenelement;
Ermitteln, für jede Klasse, einer kombinierten Zugehörigkeitswahrscheinlichkeit für die Klasse durch Summieren der für die Folgen von Entscheidungen (201) für die Klasse ermittelten Zugehörigkeitswahrscheinlichkeiten,
Ermitteln eines Verlusts der für das Trainings-Sensordatenelement ermittelten kombinierten Klassenzugehörigkeitswahrscheinlichkeit gegenüber der Grundwahrheit für die Klassenzugehörigkeit des Trainings-Sensordatenelements;
Anpassen des maschinellen Lernmodells (108, 200) zum Verringern eines Gesamtverlusts, der die für die Trainings-Sensordatenelemente ermittelten Verluste beinhaltet, wobei der Parametervektor für jede Entscheidung (201) des maschinellen Lernmodells (108, 200) innerhalb des kontinuierlichen Wertebereichs angepasst wird.

4. Verfahren nach einem der Ansprüche 1 bis 3, wobei für jede Entscheidung (201) das Ergebnis der Entscheidung (201) berechnet wird, der Null ist, wenn das Skalarprodukt kleiner ist als der vorgegebene jeweilige Parameter und ungleich Null sonst ist.

5. Datenverarbeitungsvorrichtung (105), die eingerichtet ist, ein Verfahren nach einem der Ansprüche 1 bis 4 durchzuführen.

6. Computerprogramm mit Befehlen, die, wenn sie durch einen Prozessor ausgeführt werden, bewirken, dass der Prozessor ein Verfahren nach einem der Ansprüche 1 bis 4 durchführt.

7. Computerlesbares Medium, das Befehle speichert, die, wenn sie durch einen Prozessor ausgeführt werden, bewirken, dass der Prozessor ein Verfahren nach einem der Ansprüche 1 bis 4 durchführt.

## Claims

1. Method for controlling a robot apparatus (101), comprising:
training a machine learning model (108, 200) to classify sensor data, by:
for each of the training sensor data elements of a multiplicity of training sensor data elements,
representing the training sensor data element as an input vector by means of feature extraction from sensor data from the training sensor data element, processing the input vector by means of a sequence of decisions (201) of the machine learning model (108, 200), wherein, in each decision (201), a scalar product of the input vector is formed with a respective parameter vector and a result of the decision (201) depends on whether the scalar product is less than or greater than a predefined respective parameter,
determining, depending on the results of the sequence of decisions (201), a respective class membership probability for the training sensor data element for each of a plurality of classes;
determining a loss of the class membership probability determined for the training sensor data element with respect to a ground truth for the class membership of the training sensor data element, and adapting the machine learning model (108, 200) to reduce a total loss that includes the losses determined for the training sensor data elements, wherein the parameter vector is adapted within a continuous value range for each decision (201) of the machine learning model (108, 200);
capturing sensor data relating to an environment of the robot apparatus;
classifying an object represented by the sensor data by classifying the sensor data by means of the trained machine learning model (108, 200); and controlling the robot apparatus (101) according to the classification of the object.

2. Method according to Claim 1, wherein the continuous value range is the set $S = \left\{y∈{R}^{N}\left|{\sum }_{i = 1}^{N} \left|{y}_{i}\right| \leq 1\right.\right\}$, where N is the dimension of the parameter vector.

3. Method according to Claim 1 or 2, comprising, for each of the training sensor data elements, for each sequence of a plurality of sequences of decisions (201) of the machine learning model (108, 200), processing the input vector by means of the sequence of decisions (201), wherein, in each decision (201), the scalar product of the input vector is formed with a respective parameter vector and the result of the decision (201) depends on whether the scalar product is less than or greater than a predefined respective parameter, determining, depending on the results of the respective sequence of decisions (201), a respective class membership probability for the training sensor data element for each of a plurality of classes;
determining, for each class, a combined membership probability for the class by summing the membership probabilities determined for the consequences of decisions (201) for the class,
determining a loss of the combined class membership probability determined for the training sensor data element with respect to the ground truth for the class membership of the training sensor data element;
adapting the machine learning model (108, 200) to reduce a total loss that includes the losses determined for the training sensor data elements, wherein the parameter vector is adapted within the continuous value range for each decision (201) of the machine learning model (108, 200).

4. Method according to one of Claims 1 to 3, wherein, for each decision (201), the result of the decision (201) is calculated, which is zero if the scalar product is less than the predefined respective parameter and is otherwise not equal to zero.

5. Data processing apparatus (105) which is configured to carry out a method according to one of Claims 1 to 4.

6. Computer program containing instructions which, when executed by a processor, cause the processor to carry out a method according to one of Claims 1 to 4.

7. Computer-readable medium which stores instructions which, when executed by a processor, cause the processor to carry out a method according to one of Claims 1 to 4.

## Revendications

1. Procédé de commande d'un dispositif robot (101), comportant :
l'entraînement d'un modèle d'apprentissage automatique (108, 200) pour classifier des données de capteur, par :
pour chaque élément de données de capteur d'entraînement d'une pluralité d'éléments de données de capteur d'entraînement,
la représentation de l'élément de données de capteur d'entraînement sous forme de vecteur d'entrée par extraction de caractéristiques à partir de données de capteur de l'élément de données de capteur d'entraînement,
le traitement du vecteur d'entrée par une séquence de décisions (201) du modèle d'apprentissage automatique (108, 200), dans lequel, à chaque décision (201), un produit scalaire du vecteur d'entrée avec un vecteur de paramètres respectif est formé et un résultat de la décision (201) dépend du fait que le produit scalaire est inférieur ou supérieur à un paramètre respectif prédéfini,
la détermination, en fonction des résultats de la séquence de décisions (201), pour chacune de plusieurs classes, d'une probabilité d'appartenance à une classe respectives pour l'élément de données de capteur d'entraînement ;
la détermination d'une perte de la probabilité d'appartenance à une classe déterminée pour l'élément de données de capteur d'entraînement par rapport à une vérité terrain pour l'appartenance à une classe de l'élément de données de capteur d'apprentissage, et l'adaptation du modèle d'apprentissage automatique (108, 200) pour réduire une perte totale comprenant les pertes déterminées pour les éléments de données de capteur d'entraînement, le vecteur de paramètres étant ajusté pour chaque décision (201) du modèle d'apprentissage automatique (108, 200) dans une plage de valeurs continue ;
l'acquisition de données de capteur relatives à un environnement du dispositif robotique ;
la classification d'un objet représenté par les données de capteur par classification des données de capteur au moyen du modèle d'apprentissage automatique entraîné (108, 200) ; et la commande du dispositif robotique (101) selon la classification de l'objet.

2. Procédé selon la revendication 1, dans lequel la plage de valeurs continue est l'ensemble $S = \left\{y∈{R}^{N}\left|{\sum }_{i = 1}^{N} \left|{y}_{i}\right| \leq 1\right.\right\}$, N étant la dimension du vecteur de paramètres.

3. Procédé selon la revendication 1 ou 2, comportant, pour chacun des éléments de données de capteur d'entraînement, pour chaque séquence de plusieurs séquences de décisions (201) du modèle d'apprentissage automatique (108, 200), le traitement du vecteur d'entrée par la séquence de décisions (201), dans lequel, à chaque décision (201), le produit scalaire du vecteur d'entrée avec un vecteur de paramètres respectif est calculé et le résultat de la décision (201) dépend du fait que le produit scalaire est inférieur ou supérieur à un paramètre respectif prédéfini,
la détermination, en fonction des résultats de la séquence respective de décisions (201), pour chacune de plusieurs classes, d'une probabilité d'appartenance à une classe respective pour l'élément de données de capteur d'entraînement ;
la détermination, pour chaque classe, d'une probabilité d'appartenance combinée pour la classe par sommation des probabilités d'appartenance déterminées pour les séquences de décisions (201) pour la classe,
la détermination d'une perte de la probabilité d'appartenance à une classe combinée déterminée pour l'élément de données de capteur d'entraînement par rapport à la vérité terrain pour l'appartenance à une classe de l'élément de données de capteur d'entraînement ;
l'ajustement du modèle d'apprentissage automatique (108, 200) pour réduire une perte totale comprenant les pertes déterminées pour les éléments de données de capteur d'entraînement, le vecteur de paramètres étant ajusté pour chaque décision (201) du modèle d'apprentissage automatique (108, 200) dans la plage de valeurs continue.

4. Procédé selon l'une des revendications 1 à 3, dans lequel, pour chaque décision (201), le résultat de la décision (201) est calculé comme étant nul si le produit scalaire est inférieur au paramètre respectif prédéfini et non nul dans le cas contraire.

5. Dispositif de traitement de données (105) qui est conçu pour mettre en œuvre un procédé selon l'une des revendications 1 à 4.

6. Programme informatique avec des instructions qui, lorsqu'elles sont exécutées par un processeur, amènent le processeur à mettre en œuvre un procédé selon l'une des revendications 1 à 4.

7. Support lisible par ordinateur stockant des instructions qui, lorsqu'elles sont exécutées par un processeur, amènent le processeur à mettre en œuvre un procédé selon l'une des revendications 1 à 4.
